Europäisches Patentamt

European Patent Office

Office européen des brevets

(11) Publication number: **0 292 024**
**A2**

(12) # EUROPEAN PATENT APPLICATION

(21) Application number: 88200085.4

(22) Date of filing: 19.01.88

(51) Int. Cl.4: **H01R 13/66**

(30) Priority: 21.05.87 US 52498

(43) Date of publication of application:
**23.11.88 Bulletin 88/47**

(84) Designated Contracting States:
**DE FR GB IT NL**

(71) Applicant: **THE BOEING COMPANY**
**P.O. Box 3707 Mail Stop 7E-25**
**Seattle Washington 98124-2207(US)**

(72) Inventor: **Berman, Steven M.**
**417 N. 182nd Court**
**Seattle, WA 98133(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Multiple contact connector.**

(57) A multiple contact connector including a plug
(11) and receptacle (13) formed to be matably joined
together is disclosed. The plug (11) and receptacle
(13) houses a plurality of male (37a,b,c...) and fe-
male (21a,b,c...) contact pairs for connecting power
and data wires together when said plug (11) and
receptacle (13) are joined together. The invention
comprises at least one of said male and female
contact pairs creating an electro-optical connection.
Each of the electro-optical connecting male and fe-
male contact pairs include an electro-optical trans-
ducer (75) located in one element of said electro-
optical connecting male and female contact pair and
one end of an optical fiber (65) located in the other
element of said electro-optical connecting male and
female contact pair.

Fig. 1.

EP 0 292 024 A2

## MULTIPLE CONTACT CONNECTOR

### Technical Area

This invention relates to electronic connectors and, more particularly, electronic connectors with multiple contacts.

### Background of the Invention

Multiple contact connectors play an important role in the use of self-contained assemblies of electronic components and circuitry, hereinafter referred to as "modules," in environments where speedy replaceability of the modules is desired. Speedy replaceability reduces the downtime of the system containing the modules when maintenance, inspection or replacement of the modules is to be performed. For modules with multiple leads to be connected to multiple power and signal carriers from other parts of the associated system, speedy replaceability requires that the multiple leads be connected in only a few, preferably one, connection operations. Connectors which contain multiple electrical contacts significantly reduce the number of connection operators that must be performed when replacing a module. In multiple contact connectors, pairs of male and female contact elements are fixedly positioned in two rigid structures called a plug and a receptacle. When the plug and receptacle are mated, each pair of male and female contact elements is simultaneously connected together.

The use of modules with multiple contact connectors has become increasingly prevalent in aircraft, where speedy replaceability of electronic components and circuitry is especially desirable. Modules for aircraft, commonly referred to as "line replaceable units" or "black boxes," typically range from about 150 to 1500 cubic inches in size. Many of them contain communications or navigation equipment, such as radios or gyro navigation units. Multiple contact connectors with plugs or receptacles mounted on the backs of modules are used to detachably connect the equipment inside the modules to power and signal carrier buses.

In recent years, optical fibers are replacing metallic wires as the signal-carrying medium of choice in many systems. The use of optical fibers advantageously provides immunity to electromagnetic interference, reduction in weight, and extension of system bandwidth into higher frequencies.

In order to couple a module to an optical fiber, an electro-optical transducer, i.e., a transducer that converts an optical signal into an electrical signal and/or converts an electrical signal into an optical signal, is needed. Such a transducer could be included in the module, so that the output of the module would be an optical, instead of electrical, lead. In such a system, an optical connector would be required to connect the optical of the module to a fiber optic signal carrier that forms part of the bus to which the module is to be connected. For a module with multiple optical outputs, multiple optical contact pairs in the module connector are required. The multiple optical contact pairs can be incorporated into a multiple contact connected that may also contain multiple electrical contact pairs. The use of such a multiple contact connector for coupling a module to multiple electrical and fiber optic signal carriers has the advantage of permitting a module to be connected to and disconnected from power and signal carriers in a signal connected operation.

The coupling system just described, which includes, for each fiber optic signal carrier, an electro-optical transducer inside the module plus an optical contact pair at the point of connection of the module to the exterior system, while advantageous from the point of view of maintaining speedy replaceability, is disadvantageous from the point of view of maximizing efficiency in the carrying of signals. Each time optical signals are required to pass through an optical connection, such as a connection between an electro-optical transducer and an optical fiber or a connection between aligned optical fibers, significant optical power level losses occur. Too many optical connections in a system result in the optical signal strength becoming too low to be useful. The invention is directed to a multiple contact connector that minimizes such losses.

### Summary of the Invention

In accordance with this invention, a multiple contact connector that includes both electrical and electro-optical contact pairs of associated male and female contact elements is provided. The male and female contact pairs are: (1) selectively mounted in a receptacle and a plug configured to be matably joined together; and, (2) positioned in the receptacle and plug to be connected together when the receptacle and plug are matably joined together. One of the contact elements of each electro-optical contact pair houses an electro-optical transducer and the other contact element houses one end of an optical fiber. The electro-optical transducer and the end of the optical fiber are positioned such that when the receptacle and plug are mated, an optical signal path exists between the transducer and the optical fiber.

A multiple contact connector formed in accordance with the present invention allows electronic modules to be used with optical signal carriers in a manner that is both practical and efficient. The placing of multiple electrical and optical contact pairs in a single connector minimizes the number of connection operations that must be performed when coupling modules to signal carriers, while the placing of electro-optical transducers in each optical contact pairs eliminates an optical-to-optical connection for each optical signal carrier and thereby significantly reduced power level losses in the coupled system.

### Brief Description of the Drawings

The foregoing objects and many of the attendant advantages of this invention will become more readily appreciated as the same becomes better understood by reference to the following detailed description when taken in conjunction with the accompanying drawings wherein:

FIGURE 1 is an exploded, isometric view of a multiple contact connector formed in accordance with the invention;

FIGURE 2 is a cross-sectional view along line 2-2 of a portion of the lower region of the multiple contact connector illustrated in FIGURE 1; and,

FIGURE 3 is a cross-sectional view of an electro-optical contact pair suitable for use in the multiple contact connector illustrated in FIGURES 2 and 3.

### Description of the Preferred Embodiment

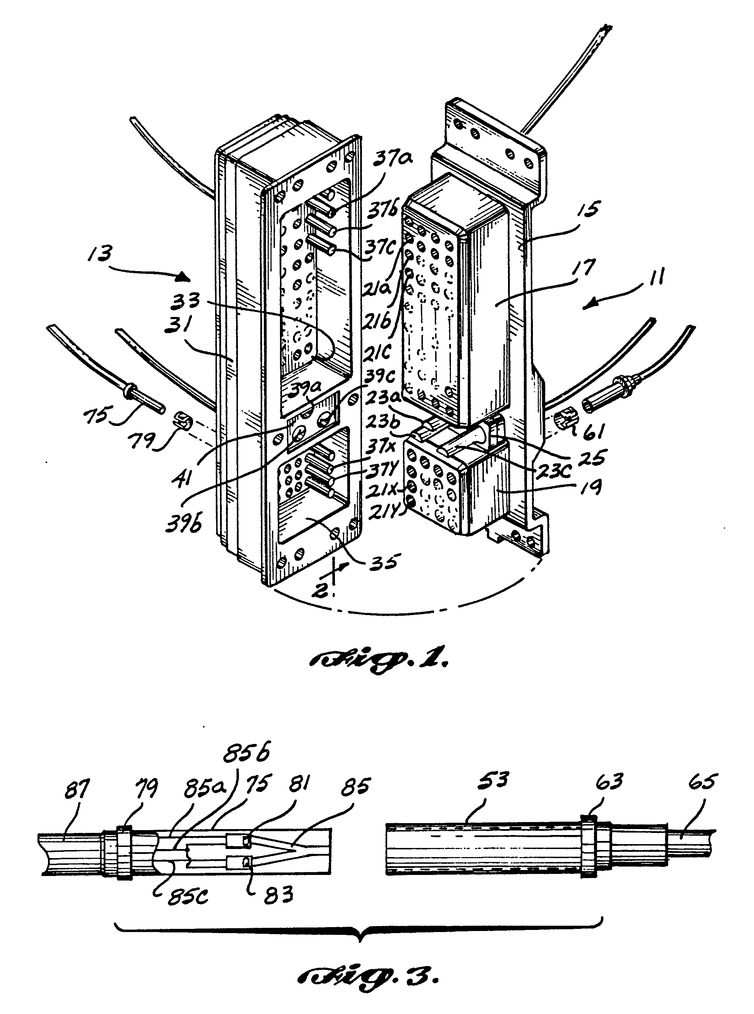

FIGURE 1 illustrates a multiple contact connector formed in accordance with the invention. The connector is in the form of a standard aircraft connector and comprises a connector male element or plug 11 and a connector female element or receptacle 13. The plug 11 includes a body 15 having spaced apart first and second contact housing protrusions 17 and 19. Each protrusion 17 and 19 houses the female members 21a, 21b, 21c, etc. of a plurality of contact pairs. Located between the first and second housing protrusions are three polarization posts 23a, 23b and 23c. The polarization posts extend outwardly from a raised plateau 25 and have a cross-sectional shape that keys the plug 11 so that it will only mate with a correspondingly keyed receptacle 13.

The receptacle 13 includes a body 31 having a spaced apart first and second cavities 33 and 35 configured, positioned and sized to receive the first and second protrusions 17 and 19 of the plug 11. Positioned in the cavities are the male members 37a, 37b, 37c, etc. of the plurality of contact pairs. Located between the first and second cavities 33 and 35 are three polarization keys 39a, 39b and 39c. The polarization keys are located at the base of an indentation 41 and are shaped, sized and positioned to receive the three polarized posts 23a, 23b and 23c that form part of the plug. The indentation 41 is shaped, sized and positioned to receive the raised plateau 25 from which the posts extend.

In a conventional manner, the plug 11 and receptacle 13 are mated by aligning the first and second protrusions 17 and 19 with the first and second cavities 33 and 35. This results in the three polarization posts 23a, 23b, and 23c being aligned with the three polarization keys 39a, 39b and 39c. After the plug and receptacle have been so aligned, the protrusions are pressed into the cavities. Simultaneously, the polarization posts are pressed into the polarization keys. When this occurs, the male members 37a, 37b, 37c, etc. of the plurality of contact pairs engage related female members 21a, 21b, 21c, etc. of the plurality of contact pairs.

In the past, connectors of the type illustrated in FIGURE 1 have been used to make an electrical connection between wires connected to the male and female members of the contact pairs. Depending upon the nature of the systems being connected together, the wires can take on a variety of forms. They can vary between relatively small diameter wires designed to carry electric signals to relatively large diameter wires designed to carry electric power. Further, the wires can be shielded or unshielded, i.e., coaxial cable. Regardless of their nature, the male and female members create a metal-to-metal electrical connection.

In recent years, optical fibers have been developed for carrying electronic signals. Optical fibers have a number of advantages over electrical wires. They are lighter in weight and extend system bandwidth through their ability to carry signals at higher frequencies. Further, optical fibers are immune to electromagnetic interference. Thus, in many instances, optical fibers are replacing metallic wires as the signal-carrying medium of choice.

In order to transmit data signals via an optical fiber, electrical data signals must first be converted to optical or light signals. The conventional location of the electro-optical transducer is at the source of the data signals, i.e., at the location of the electronic module that produces the data signals. In the case of an aircraft, this would be in the "line replaceable units" or "black boxes." In any event, with the electro-optical transducer is located at the electronic module in a line replaceable unit that produces the data signals, one optical-to-optical connection must be made at the module to a short fiber running between the module and the line replaceable unit connector. A second optical-to-optical connection is made at the connector between a pair of male and female elements. Unfortunately, unlike electrical signals, significant signal power level losses occur at each optical-to-optical connection in a system. In accordance with the invention, optical-to-optical conversion losses are minimizing by location the electro-optical connectors of a system in the multiple contact connector rather than in the electronic modules and connecting the modules to the multiple contact electrical connector. More specifically, in accordance with the invention, one or more of either the male or female contact elements of a multiple contact connector includes an electro-optical transducer. The corresponding female or male contact element includes an optical fiber positioned to optically "mate" with the optical output of the electro-optical transducer.

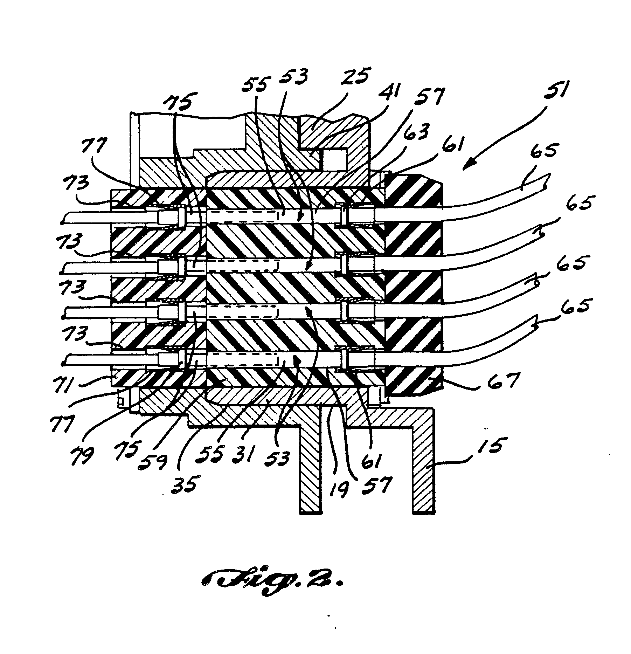

FIGURE 2 illustrates several electro-optical contact pairs 51 positioned in the second contact protrusion 19 and cavity 35 of the connector illustrated in FIGURE 1. The female member 53 of each of the electro-optical contact pairs is mounted in the protrusion 19. The female members 53 each include a cylindrical terminal 55 mounted in holes 57 formed in an insulated contact support block 59 mounted in the protrusion 19. The holes 57 lie orthogonal to the abutting mating face of the protrusion 19. The cylindrical terminals 55 are held in place by compressed rings 61 positioned in enlarged areas of the holes 57. The rings 61 impinge on shoulders 63 formed in the cylindrical terminal elements 55. An optical fiber 65 extends into each of the cylindrical terminals 55. Preferably, the optical fibers 65 are sheathed with a protective layer. Also, preferably, the backside of the rigid insulator block 59 is covered with a semi-resilient, e.g., rubber-like, block 67 that presses against the outer surface of the optical fibers 65. The semi-resilient block 67 may be attached to the rigid block 59 by any suitable means, such as a layer of adhesive.

Located at the base of the cavity 35 is a rigid insulated block 71 having a plurality of holes 73 positioned to be aligned with the holes 57 formed in the rigid insulator block 59 located in the protrusion 19 when the plug and receptacle are mated. Mounted in the holes 73 are electro-optical transducers 75. The electro-optical transducers 75 are held in place by metal rings 77 that press shoulders 79 located at one end of the electro-optical transducer 75 against the shoulder of an undercut region formed in the holes 73. As best illustrated in FIGURE 3, each of the electro-optical transducers includes a photodiode 81 and a light-emitting diode 83. A Y-shaped optical waveguide 85 connects the optical end of the photodiode 81 and LED 83 to the tip of the electro-optical transducer. The electrical ends of the photodiode 81 and light-emitting diode 83 are connected to the wires 85a, 85b and 85c of a cable 87. The electro-optical transducers 75 are sized to fit inside the cylindrical terminals 55 when the plug and receptacle are mated together. When so positioned, the end of the Y-shaped optical guide is in optical communication with the end of the optical fiber 65.

As will be readily appreciated from the foregoing description, the invention provides a multiple electrical connector that includes both electrical and optical contact elements. The electrical contact elements operate in a conventional manner to carry data signals and power to and from a module electrically attached to either the male or female element of the connector. The optical contacts provide electro-optical conversion inside the connector contacts. As a result, the signal loss associated with an optical-to-optical connector located at the multiple connector (which is necessary when optical-to-electrical conversion is created at a location remote from the connector) is avoided.

While a preferred embodiment of the invention has been illustrated and described, it will be appreciated that various changes can be made therein without departing from the spirit and scope of the invention. For example, the connector housing can be formed in a variety of manners. Rather than a two protrusion/cavity combination, a single protrusion/cavity combination or more than two protrusion/cavity combinations can be utilized. Further, keying mechanisms other than polarization post/key mechanisms can be utilized if desired. Alternatively, keying the receptacles to the plug can be avoided entirely. Further, other types of mechanisms for aligning the fiber optic transducer with an optical fiber can be utilized. Consequently, the invention can be practiced otherwise than as specifically described herein.

## Claims

1. In a multiple contact connector including a plug and a recepticle formed to be matably joined together, said plug and receptacle housing a plurality of male and female contact pairs for connecting power and data wires together when said plug and receptacle are joined together, the improvement comprising at least one of said male and female contact pairs creating an electro-optical connection, said electro-optical connecting male and female contact pair including an electro-optical transducer located in one element of said electro-optical connecting male and female contact pair and one end of an optical fiber located in the other element of said electro-optical connecting male and female contact pair.

2. The improvement claimed in Claim 1 wherein said electro-optical transducer includes a light-emitting diode.

3. The improvement claimed in Claim 2 wherein said electro-optical transducer includes a photodiode.

4. The improvement claimed in Claim 1 wherein said electro-optical transducer includes a photodiode.

5. The improvement claimed in Claim 1 wherein a plurality of said male and female contact pairs create electro-optical connections, said electro-optical connecting male and female contact pairs each including an electro-optical transducer located in one element of said electro-optical connecting male and female contact pair and an optical fiber located in the other element of each of said electro-optical connecting male and female contact pairs.

6. The improvement claimed in Claim 5 wherein said electro-optical transducers of said electro-optical connecting male and female contact pairs include light-emitting diodes.

7. The improvement claimed in Claim 6 wherein said electro-optical transducers of said electro-optical connecting male and female contact pairs also include photodiodes.

8. The improvement claimed in Claim 5 wherein the electro-optical transducers of said electro-optical connecting male and female contact pairs include photodiodes.

*Fig. 1.*

*Fig. 3.*

*Fig. 2.*